Europäisches Patentamt

**European Patent Office**

Office européen des brevets

(19)

(11) Veröffentlichungsnummer: **0 027 898**
**B1**

(12) # EUROPÄISCHE PATENTSCHRIFT

(45) Veröffentlichungstag der Patentschrift:
07.09.83

(21) Anmeldenummer: **80105768.8**

(22) Anmeldetag: **25.09.80**

(51) Int. Cl.³: **F 23 N 1/00,** F 24 C 3/12

(54) **Vorrichtung zur Steuerung der Gaszufuhr.**

(30) Priorität: **13.10.79 DE 2941543**

(43) Veröffentlichungstag der Anmeldung:
**06.05.81 Patentblatt 81/18**

(45) Bekanntmachung des Hinweises auf die Patenterteilung:
**07.09.83 Patentblatt 83/36**

(84) Benannte Vertragsstaaten:
**AT BE CH FR GB IT LI LU NL SE**

(56) Entgegenhaltungen:
**DE-B-1 529 038**
**US-A-3 841 552**

(73) Patentinhaber: **Paul Isphording Metallwerke GmbH. & Co. KG, Finnentroper Strasse 16, D-5952 Attendorn (DE)**

(72) Erfinder: **Friedrich, Manfred, Alperscheid 1, D-5962 Drolshagen (DE)**

(74) Vertreter: **Patentanwaltsbüro Cohausz & Florack, Schumannstrasse 97, D-4000 Düsseldorf 1 (DE)**

BUNDESDRUCKEREI BERLIN

## Vorrichtung zur Steuerung der Gaszufuhr

Die Erfindung betrifft eine Vorrichtung zur Steuerung der Gaszufuhr zu einem mindestens eine Flamme aufweisenden Gasverbraucher, insbesondere einem Gasherd, mit zwei in der Gaszufuhrleitung hintereinander angeordneten Absperrorganen, von denen das erste eine Absperrvorrichtung mit einem drehbaren Verschlußglied, insbesondere ein Hahn mit einem Küken, ist, die im wesentlichen nur völlig geöffnet oder vollständig geschlossen ist, und von denen das zweite ein Ventil mit einem Stellglied ist, das zum Regeln der Durchflußmenge neben den Endstellungen Zwischenstellungen einnimmt, wobei jedes Absperrorgan durch ein Drehteil, insbesondere eine Welle, betätigt wird, wobei die Achsen der Drehteile zueinander parallel sind und wobei das erste Drehteil durch einen Handgriff und das zweite Drehteil über ein Getriebe vom ersten Drehteil angetrieben wird, und das durch den Handgriff angetriebene erste Drehteil das Stellglied des Ventils direkt und das Verschlußglied der Absperrvorrichtung über das Getriebe antreibt.

Eine solche Vorrichtung ist aus der DE-OS 2 417 608 bekannt. Bei dieser bekannten Vorrichtung wird das Verschlußglied der Absperrvorrichtung entweder direkt oder über ein Zahnradgetriebe vom Handgriff betätigt. Hierdurch wird das Verschlußglied ständig bewegt, obwohl es nur eine Auf/Zu- und Umsteuerungsfunktion hat. Dies führt nicht nur zu einem hohen Verschleiß des sicherheitstechnisch sehr wichtigen Verschlußgliedes, sondern es muß auch sehr große Verbindungsöffnungen oder Ringschlitze zur Verbindung mit den Auslaßöffnungen aufweisen.

Aus der DE-OS 1 629 860 ist es bekannt, das Verschlußglied der Absperrvorrichtung koaxial zu dem die Antriebsachse bildenden Drehteil anzuordnen und direkt und gleichsinnig zu betätigen und das Ventilstellglied über mehrere Übertragungselemente mit der Antriebsachse zu verbinden. Auch bei dieser Anordnung entsteht durch die Übertragungslemente zwischen der Antriebsachse und dem Ventilstellglied Spiel, das durch die erforderlichen Toleranzen und Fertigungsungenauigkeiten hervorgerufen wird, was wiederum einer hohen Regelgenauigkeit des Ventils abträglich ist. Ferner muß bei der bekannten Vorrichtung das Verschlußglied einen verschieden großen Ringschlitz zur Verbindung mit der Auslaßöffnung aufweisen, da sich das Verschlußglied ständig während der Verstellung der Antriebsachse und des Ventilstellgliedes mitdreht.

Aufgabe der Erfindung ist es, ein konstruktiv einfaches Getriebe zu schaffen, das einen einfachen Aufbau des Verschlußgliedes der Absperrvorrichtung ermöglicht und unnötige Bewegungen des Verschlußgliedes verhindert.

Diese Aufgabe wird erfindungsgemäß dadurch gelöst, daß das Getriebe ein Malteserkreuzgetriebe ist mit einem mit dem ersten Drehteil verbundenen Treiber und einem Malteserkreuz, das mit dem zweiten Drehteil verbunden ist.

Ein besonders einfaches Getriebe wird durch ein Malteserkreuzgetriebe geschaffen.

Durch ein Malteserkreuzgetriebe wird sichergestellt, daß das Verschlußglied nur während des anfänglichen Drehens der Antriebsachse bzw. des Handgriffes drehverstellt wird und danach während der Steuerung oder Regelung des Ventils durch die Antriebsachse oder den Handgriff stehenbleibt. Ferner läßt ein Malteserkreuzgetriebe zu, daß das Verschlußglied mehrere einander unterschiedliche Positionen vor der Verstellung des Ventilstellgliedes einnehmen kann und in diesen Stellungen arretiert ist. Die geringe Bewegung des Verschlußglieds führt auch zu einem geringen Verschleiß des Hahnes und des Dichtfettes und gewährleistet über eine lange Zeit eine hohe Dichtigkeit.

Das Verschlußglied ist von einfachster Konstruktion, da es während der Verstellung des Ventilstellgliedes sich nicht mitdrehen muß, und statt der bisher am Umfang angebrachten Versorgungskanäle nur Bohrungen aufweist.

Eine sichere Arretierung des Verschlußgliedes in den jeweiligen Stellungen wird dadurch geschaffen, daß der Treiber nach Verstellen des Malteserkreuzes mit einer Zylindersperre in einer entsprechend teilzylindrisch geformten Ausnehmung des Malteserkreuzes zu dessen Arretierung einliegt.

Vorzugsweise wird das Verschlußglied der Absperrvorrichtung koaxial von einem axial eindrückbaren Stößel durchsetzt, durch den das Ventilstellglied eines durch eine thermoelektrische Zündsicherung gesteuerten Sicherheitsventils in Offenstellung bewegbar ist. Hierbei kann zur Betätigung des Sicherheitsventils durch den Handgriff am ersten Drehteil oder am Treiber ein radialer, am Stößelende anliegender Arm befestigt sein, der, um den Stößel einzudrücken, durch ein axiales Eindrücken des Handgriffs in axialer Richtung mitbewegbar ist.

Um das Verschlußglied in zwei unterschiedliche Drehstellungen bringen zu können, in denen zwei unterschiedlichen Verbrauchern Gas zugeführt wird, wird vorgeschlagen, daß das erste Drehteil am Handgriff fest ist, in eine koaxiale Hülse des Treibers hineinreicht und einen Mitnehmerstift aufweist, der in zwei diametral angeordneten axialen Längsschlitzen der Hülse beweglich einliegt und über den Hülsenumfang beidseitig hinausragt zur Bewegung des radialen Arms gegen Federdruck in Achsrichtung.

Ein in der Konstruktion besonders einfaches Ventil hoher Steuer- oder Regelgenauigkeit wird dadurch geschaffen, daß am Treiber auf der dem ersten Drehteil gegenüberliegenden Seite ein Ventilstellglied, insbesondere eine Gewindespindel, koaxial drehfest und axial verschieblich befestigt ist, das mit einem koaxialen Gewinde in einem entsprechenden Gewinde der Vorrichtung einliegt und nach Axialverschiebung an einem Sitz des Ventils zur Anlage gelangt.

Ausführungsbeispiele der Erfindung sind in den Zeichnungen schematisch dargestellt und werden im folgenden näher beschrieben. Es zeigt

Fig. 1 einen Schnitt durch die erfindungsgemäße Vorrichtung,

Fig. 2 eine Vorderansicht auf die Vorrichtung bei abgenommener Abdeckhaube und fehlendem Handgriff und Schaltarm,

Fig. 3 bis 5 das Getriebe in drei Stellungen für einen Hahn mit zwei Ausgängen,

Fig. 6 und 7 ein zweites Ausführungsbeispiel für einen Hahn mit einem Ausgang,

Fig. 8 bis 10 ein drittes Ausführungsbeispiel für einen Hahn mit zwei Ausgängen, von denen wahlweise einer von beiden und beide gleichzeitig an den Gaseinlaß anschließbar sind und

Fig. 11 bis 14 ein viertes Ausführungsbeispiel mit zwei Hahnausgängen.

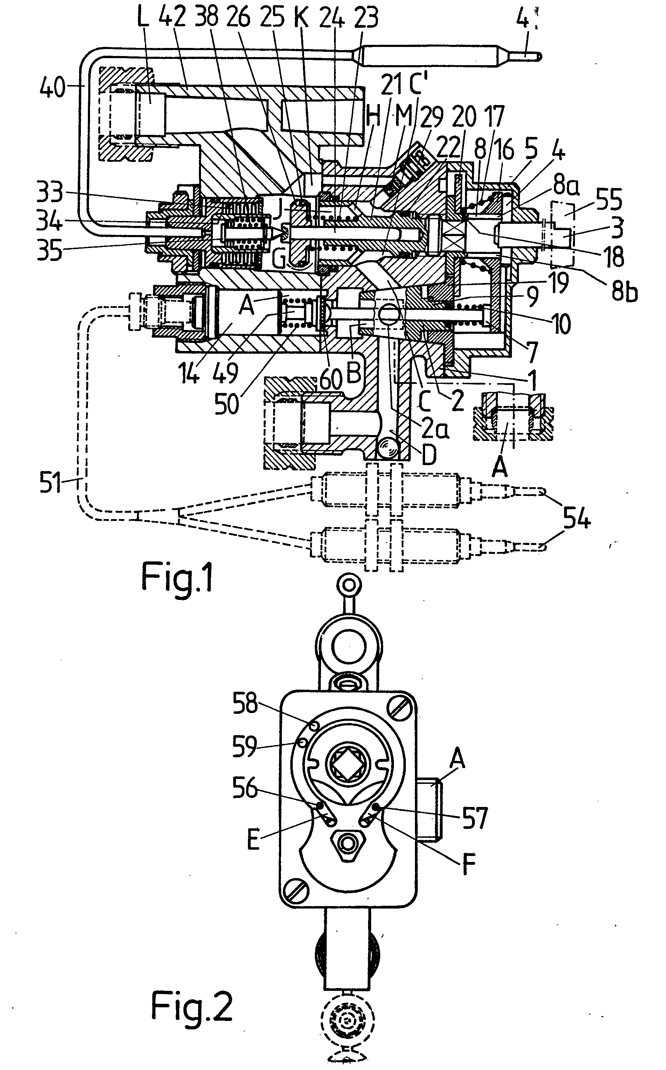

Nach dem in den Fig. 1 bis 5 gezeigten ersten Ausführungsbeispiel weist die Vorrichtung ein Gehäuse 1 auf, in das von der senkrechten vorderen Stirnseite des Gehäuses aus eine waagerechte Bohrung rechtwinklig eingebracht ist, die bis zur Rückseite durchgeführt ist, verschiedene Durchmesser aufweist und in der eine Gewindespindel koaxial einliegt, die ein Ventilstellglied 21 bildet. Das Ventilstellglied 21 weist auf einem Teil seines Umfangs ein Gewinde auf, das in einem Innengewinde der Bohrung einliegt, so daß ein Verdrehen des Ventilstellglieds um die Längsachse zu einem axialen Verschieben innerhalb der Bohrung führt. Das Ventilstellglied ragt mit einem Vierkant aus der Vorderseite des Gehäuses hervor und trägt dort für ein Malteserkreuzgetriebe einen Treiber 18 mit Treiberstifte 56, 57 aufweisenden Kurbelarmen 20 und einer Zylindersperre. Am Treiber 18 steht nach außen hin eine Hülse 8 vor, die diametral gegenüberliegend zwei axiale Längsschlitze 8a, 8b aufweist, in denen ein Mitnehmerstift 4 verschieblich einliegt, der durch ein erstes Drehteil (Griffschaft) 3 quer hindurchgesteckt ist, das koaxial zum Ventilstellglied 21 um die Längsachse drehbar und längsverschieblich in einer Abdeckhaube 5 gelagert ist, die auf der Vorderseite des Gehäuses 1 befestigt ist. An dem aus der Abdeckhaube 5 herausragenden freien Ende des Drehteils 3 ist ein Handgriff 55 befestigt. Auf der Hülse 8 ist ein Schaltarm 16 gelagert, der sich nach unten hin radial erstreckt, in dem sich die Hülse 8 dreht, ohne dessen nach unten weisende Stellung zu verändern, und der durch eine zwischen Treiber 18 und Stift 4 befindliche konische Schraubendruckfeder 17 gegen den Stift 4 gedrückt wird.

Auf der dem Treiber 18 gegenüberliegenden Seite weist das Ventilstellglied 21 einen koaxialen Ringraum J auf, dessen ringförmige äußere Stirnwand das Stirnende des Ventilstellgliedes bildet und an einem Ventilsitz G eines Ventiltellers 26 zur Anlage gelangt, wenn das Ventilstellglied verdreht und dadurch axial verschoben wird. Der Ventilteller 26 ist koaxial auf einer Stange 24 drehfest angeordnet, die in einer koaxialen Bohrung des Ventilstellglieds 21 verschieblich einliegt. Der Ventilsitz des Ventiltellers 26 wird von einer aufgeschrumpften ringförmigen Kunststoffdichtung gebildet, die aus Polytetrafluoräthylen besteht. Die äußere Stirnseite des freien Endes der Stange 24 weist eine mittige Ausnehmung auf, in der die Spitze eines Körners 35 einliegt. Der Körner 35 wird über einen Balg 33 durch den Flüssigkeitsdruck eines Thermostatfühlers 41 zum Ventilteller hin gedrückt, wobei ein Ansteigen der Temperatur diesen Druck erhöht. Der Flüssigkeitsdruck wird von dem Fühler 41 durch eine Leitung 40 dem Balg 33 zugeführt, der in einer Hülse 34 angeordnet ist.

Senkrecht unter dem Ventilstellglied 21 ist achsparallel zu diesem ein Küken 2 eines Hahns im Gehäuse 1 drehbar gelagert, wobei das Küken einen aus dem Gehäuse herausragenden zylindrischen, koaxialen Vorsprung aufweist, der ein zweites Drehteil 9 bildet. Auf dem Drehteil 9 ist ein Malteserkreuz 19 drehfest und unverschieblich angeordnet, das den Rand der das Küken aufnehmenden konischen Bohrung überragt und in das die Stifte 56, 57 der Kurbelarme 20 des Treibers 8 hineinreichen.

Im Küken 2 liegt in einer Längsbohrung koaxial ein Stößel 7 axial verschieblich ein, der durch eine außen am Stößel anliegende Schraubendruckfeder 10 gegen das äußere Ende des Schaltarms 16 gedrückt wird und mit seinem anderen Ende an dem Ventilteller 60 eines Sicherheitsmagnetventils 14 anliegt. Der Ventilteller 60 ist durch eine Schraubendruckfeder 50 in Schließrichtung belastet und an einer Stange 49 kopfseitig befestigt, die an einem nicht dargestellten Anker einer Magnetspule angeordnet ist oder diesen bildet. Die Magnetspule wird durch ein thermoelektrisches Element eines Brennertemperaturfühlers 54 erregt. Zum Zünden des Brenners wird der Griff 55 eingedrückt und damit über den Arm 16 und den Stößel 7 der Ventilteller 60 in Offenstellung gedrückt. Damit wird die Stange 49 und der Anker in die Magnetspule bzw. an den Magneten gedrückt, bis die Flamme des Brenners den Brennertemperaturfühler erwärmt hat und dieser einen elektrischen Strom erzeugt, der die Spule erregt und eine Magnetkraft erzeugt, mit der der Anker gegen die Federkraft der Feder 50 gehalten wird. Da das Küken 2 neben der geschlossenen Stellung wahlweise in zwei geöffnete Stellungen bewegbar ist, bei denen die radiale Bohrung 2a des Kükens mit den Ausgängen C oder D verbunden ist, um das Gas zwei verschiedenen Verbrauchern zuzuführen, sind auch zwei Fühler 54 für die beiden Verbraucher vorgesehen, die über eine Leitung 51 mit der Spule verbunden sind.

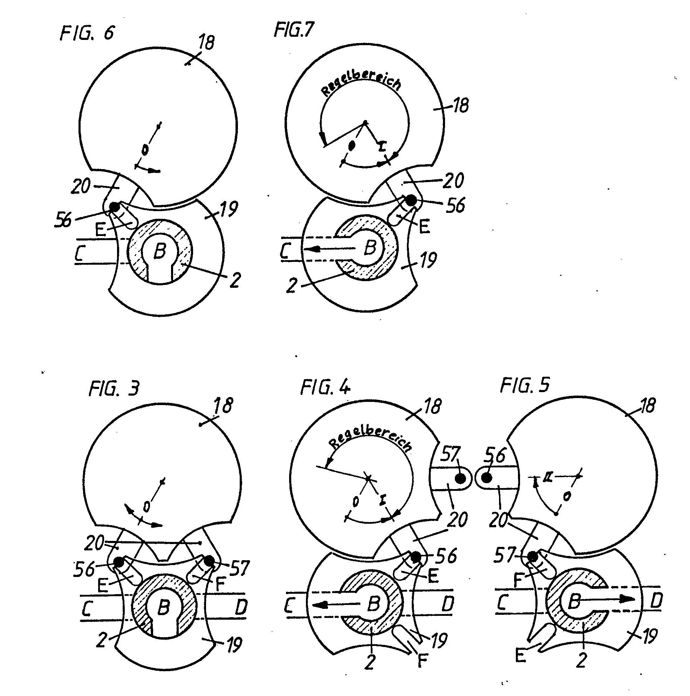

Durch Eindrücken des ersten Drehteiles (Griffschaft) 3 wird über den Mitnehmerstift 4 der Schaltarm 16 auf der geschlitzten Nabe des Treibers 18 axial gegen die Feder 17 verschoben. Der Schaltarm 16 betätigt den Stößel 7, der das Magnetventil 14 der thermoelektrischen Zündsicherung öffnet. Damit ist der Gaszufluß vom Gaseingang A über die damit immer in Verbindung stehende Kammer A' des Magnetventils zum Innenraum B des Kükens (Stellteil) 2 freigegeben. Das Küken 2 hält in seiner Ruhelage die Gasausgänge — in diesem Falle C und D — noch geschlossen (Fig. 3). Durch gleichzeitiges Drehen des Drehteiles 3 dreht der Mitnehmerstift 4 den Treiber 18 mit den Armen 20 und den Treiberstiften 56 und 57.

Wird das Drehteil 3 im Uhrzeigersinn gedreht, greift der Treiberstift 57 in den Schlitz F des Malteserkreuzes 19 ein und dreht das mit ihm gekoppelte Küken 2 in die Position II (Fig. 5). Damit ist die Verbindung vom Raum B zum Ausgang D hergestellt. Der Ausgang D führt direkt zu einem Brenner (z. B. Grillbrenner eines Backofens). Die Bewegung des Treibers 18 ist in dieser Position beendet, der Drehweg durch Anschlagen des Treiberstiftes 56 am Anschlag 59 begrenzt.

Wird das Drehteil 3 entgegen dem Uhrzeigersinn gedreht, greift der Treiberstift 56 in den Schlitz E des Malteserkreuzes 19 ein und dreht das mit ihm gekoppelte Küken 2 in die Position I (Fig. 4). Damit ist die Verbindung vom Raum B zum Ausgang C hergestellt. Der Ausgang C führt innerhalb des Gehäuses 1 zum Regelventil 21 bis 26.

Wird das Drehteil 3 entgegen dem Uhrzeigersinn weitergedreht, bleibt das Küken 2 stehen, da der Treiberstift 56 außer Eingriff mit dem Schlitz E des Malteserkreuzes 19 kommt. Gleichzeitig wird durch die besondere Formgebung von Treiber 18 und Kreuz 19 verhindert, daß sich das Kreuz 19 mit dem angekoppelten Küken 2 ungewollt, z. B. durch Erschütterungen, selbst verstellen kann.

Der Treiber 18 ist auf dem Mehrkant des Ventilstellglieds (Gewindespindel) 21 drehfest gelagert, wobei der Mehrkant des Ventilstellglieds 21 in der Nabe des Treibers 18 verschiebbar ist.

Wird das Drehteil 3 gedreht, bewegt sich das Ventilstellglied 21 gleichsinnig mit diesem und führt außerdem noch eine der Gewindesteigung entsprechende Axialbewegung aus.

Der Drehwinkel für den Regelbereich kann innerhalb bestimmter Grenzen willkürlich festgelegt (Fig. 4) und durch einen Anschlagstift 58 (Fig. 2) begrenzt werden.

Das Ventilstellglied 21 ist an dem dem Mehrkant gegenüberliegenden Ende als Ventilsitz G ausgebildet. Das vom Küken 2 über den Ausgang C und Kammer C' zum Ventil fließende Gas tritt durch die an dem Ventilstellglied 21 ringsum auf einem Kreis angeordneten Bohrungen H in den Ringraum J am Ventilsitz G, wobei es durch den Ventilteller 26, der auf der Stange 24 gasdicht aufgepreßt und in dem Ventilstellglied 21 verschiebbar gelagert ist, dosiert wird.

Eine in dem Ringraum J angeordnete Feder 23 drückt den Ventilteller 26 ständig mit ausreichender Kraft gegen die Körnerspitze 35 und gleicht andererseits das Axialspiel zwischen Ventilstellglied 21 und Gehäuse 1 aus.

Je nach Temperatur des Fühlers 41 verändert sich das Volumen der eingeschlossenen Flüssigkeit und verschiebt den Boden des Balgs (Federkörpers) 33. Auf dem Boden des Balgs 33 aufliegend bewegt sich eine Hülse 34 und mit ihr die darin eingebaute Körnerspitze 35. Zwischen der Körnerspitze 35 und der konzentrisch angebrachten Zentrierbohrung (Vertiefung) der Stange 24 des Ventiltellers 26 besteht nur eine punktförmige Berührungsfläche. Diese Art der Kraftübertragung vermeidet alle Querkräfte, die ein Verecken des Ventiltellers 26 zum Ventilsitz G zur Folge hätten.

Der auf den Ventilteller 26 aufgeschrumpfte Dichtring aus Polytetrafluoräthylen 25 ist einerseits noch elastisch genug, um den Gasstrom in bestimmten Fällen vollständig am Ventilsitz abzudichten, andererseits aber formstabil genug — besonders bei hoher Temperatur und Belastung —, um den Steuerspalt am Sitz G nicht nachteilig zu beeinflussen.

Die Körnerspitze 35 ist mit einer Feder 38 in der Hülse 34 gehalten. Diese Feder arbeitet als Überlastungsschutz, falls eine Temperatur auf den Fühler 41 einwirkt, die höher ist als die, die der Stellung des Ventilstellglieds 21 zugeordnet ist. Der Überlastungsschutz verhindert ein Bersten des Balgs 33 infolge Überdrucks.

Nachdem der Gasstrom den Spalt zwischen Ventilsitz G und Ventilteller 26, 25, an dem er entsprechend der vorgewählten Einstellung dosiert worden ist, passiert hat, gelangt er über den Raum K, den Auslaß L und die Endkappe 42 zum Brenner.

Eine durch eine Drossel 29 im Querschnitt bestimmte Bypassbohrung M zwischen Kammer C' und Raum L garantiert, daß bei geöffnetem Küken 2 immer ein Mindestgasstrom zum Brenner gelangt und dort eine stabile Flamme aufrechterhält, auch dann, wenn der Ventilteller 26 fest auf dem Sitz G aufliegt und den Gasstrom an dieser Stelle vollständig absperrt.

In den Fig. 6 bis 14 sind alternative Ausführungen für verschiedene Anwendungen dargestellt.

Die Fig. 6 und 7 zeigen einen Funktionsablauf für eine vereinfachte Ausführung, wenn nur ein Gasauslaß C für einen Brenner vorhanden ist. Diese Ausführung wird vorzugsweise für Backöfen ohne irgendwelche gasbetriebenen Zusatzeinrichtungen verwendet. Der Funktionsablauf ist gleich wie der für die Fig. 3 bis Fig. 5, jedoch entfallen die Funktion der Fig. 5 und alle in diesem Zusammenhang benötigten Funktionsteile.

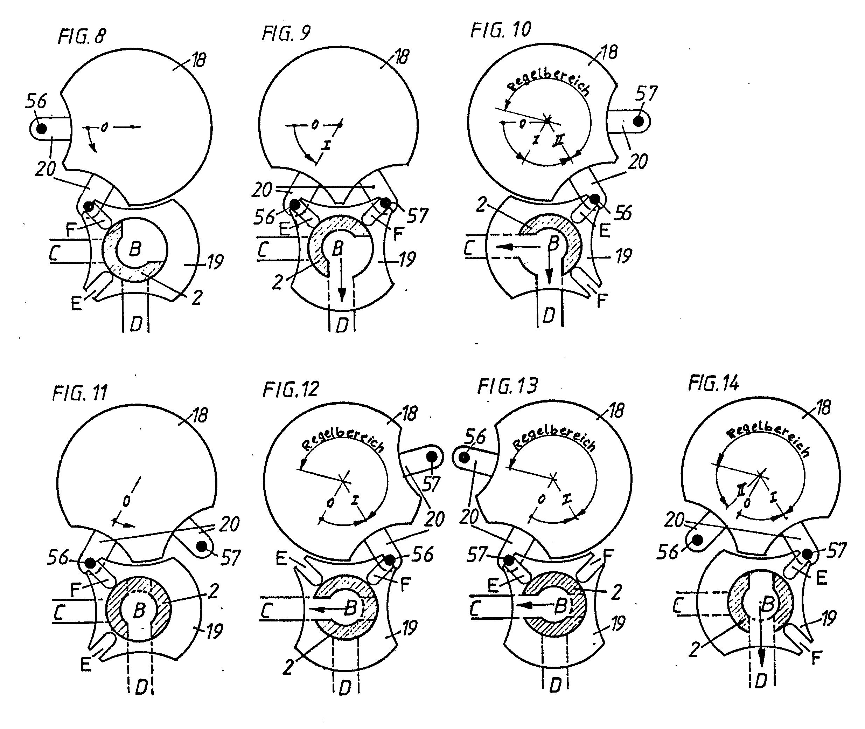

Die Fig. 8 bis 10 zeigen einen Funktionsablauf für einen Hauptbrenner mit einem Anschluß für einen Zündflammenbrenner.

Wird die Anschlagstellung im Uhrzeigersinn des Treibers 18 (Fig. 8) als Position 0, in der die Gasausgänge C und D durch das Küken 2 verschlossen sind, benutzt, so ergibt sich nach Drehen des Treibers 18 entgegen dem Uhrzeigersinn in die Stellung I (Fig. 9) eine Öffnung des Gasauslasses von B nach D zum Betreiben einer Zündflamme am Auslaß D. Die Treiberstifte 56 und 57 halten das Kreuz 19 mit dem Küken 2 in dieser Position fest.

Wenn der Treiber 18, nachdem die Zündflamme brennt, entgegen dem Uhrzeigersinn weitergedreht wird, gelangt das Kreuz 19 mit dem daran drehfest angeordneten Küken 2 in die Position II (Fig. 10). In dieser Position sind beide Ausgänge C und D geöffnet und der Hauptbrenner, der über den Anschluß C versorgt ist, wird von der Zündflamme gezündet.

Der nun folgende Drehbereich des Treibers 18 (Fig. 10) entgegen dem Uhrzeigersinn bis zum Anschlag dient ausschließlich der Einstellung des Ventilstellgliedes. Das Kreuz 19 mit dem Küken 2 bleibt verriegelt in der Position II stehen, während sich der Treiber 18 weiter entgegen dem Uhrzeigersinn oder auch wieder zurück bis in die Position II bewegt.

Die Fig. 11 bis 14 zeigen einen Funktionsablauf, bei dem der Regelbereich des Thermostaten zwischen zwei Positionen des Kükens 2 liegt. Diese Ausführung kommt z. B. zur Anwendung, wenn für die Einstellung mit der niedrigsten Temperatur ein separater Gasbrenner verwendet wird, der mit einem konstanten Gasstrom versorgt werden soll, während der Hauptbrenner abgeschaltet ist.

Die Fig. 11 zeigt die Position 0, wobei der Treiber 18 in Anschlagstellung ist. Der Treiberstift 56 greift hierbei in den Schlitz F des Kreuzes 19 und hält diesen mit dem Stellteil 2 in der Stellung, daß die Ausgänge C und D geschlossen sind. Zu erwähnen ist hierbei, daß der Ausgang D gegenüber dem Ausgang C in der Bildebene (von Fig. 11) versetzt sein muß.

Durch Drehen des Treibers 18 (Fig. 12) entgegen dem Uhrzeigersinn in die Position I wird das Kreuz 19 mit dem Küken 2 in die Stellung gebracht, in der der Gasausgang C geöffnet ist. Wird der Treiber 18 entgegen dem Uhrzeigersinn weitergedreht, kommt der Treiberstift 56 außer Eingriff mit dem Schlitz F des Kreuzes 19. Das Kreuz 19 mit dem Küken 2 wird verriegelt, und die Drehbewegung des Treibers 18 betätigt nur die Einstellung des Regelelements, bis der Treiberstift 57 (Fig. 13) am Ende des Regelweges in den Schlitz E des Kreuzes 19 eingreift.

Der Treiber 18 ist jetzt in der Lage, mittels Treiberstift 57 das Kreuz 19 mit dem Küken 2 in die Endposition II (Fig. 14) zu drehen. Damit wird der Gasstrom zum Ausgang D freigegeben und gleichzeitig der zum Ausgang C abgesperrt. Der Ausgang D versorgt z. B. einen Hilfsbrenner, der nur in dieser Stellung brennt und der vom Hauptbrenner gezündet wird, bevor dieser verlöscht.

Wird der Treiber 18 in umgekehrter Richtung gedreht, zündet der Hilfsbrenner, bevor er verlöscht, den Hauptbrenner.

## Patentansprüche

1. Vorrichtung zur Steuerung der Gaszufuhr zu einem mindestens eine Flamme aufweisenden Gasverbraucher, insbesondere einem Gasherd, mit zwei in der Gaszufuhrleitung hintereinander angeordneten Absperrorganen, von denen das erste eine Absperrvorrichtung mit einem drehbaren Verschlußglied, insbesondere ein Hahn mit einem Küken (2), ist, die im wesentlichen nur völlig geöffnet oder vollständig geschlossen ist, und von denen das zweite ein Ventil (21 — 26) mit einem Stellglied (21) ist, das zum Regeln der Durchflußmenge neben den Endstellungen Zwischenstellungen einnimmt, wobei jedes Absperrorgan durch ein Drehteil (3; 9), insbesondere eine Welle, betätigt wird, wobei die Achsen der Drehteile (3; 9) zueinander parallel sind und wobei das erste (3) Drehteil durch einen Handgriff (55) und das zweite Drehteil (9) über ein Getriebe (18, 19) vom ersten Drehteil (3) angetrieben wird, und das durch den Handgriff (55) angetriebene erste Drehteil (3) das Stellglied (21) des Ventils direkt und das Verschlußglied der Absperrvorrichtung über das Getriebe (18, 19) antreibt, dadurch gekennzeichnet, daß das Getriebe ein Malteserkreuzgetriebe ist mit einem mit dem ersten Drehteil (3) verbundenen Treiber (18) und einem Malteserkreuz (19), das mit dem zweiten Drehteil (9) verbunden ist.

2. Vorrichtung nach Anspruch 1, dadurch gekennzeichnet, daß die Absperrvorrichtung nur einen Auslaß (c) öffnet und der Treiber (18) nur einen Stift (56) aufweist, der in einen Schlitz (E) des Malteserkreuzes (19) eingreift.

3. Vorrichtung nach Anspruch 1, bei der die Absperrvorrichtung wahlweise einen von zwei Auslässen öffnet, dadurch gekennzeichnet, daß der Treiber (18) zwei Stifte (56, 57) aufweist, die in zwei Schlitze (E, F) des Malteserkreuzes (19) eingreifen.

4. Vorrichtung nach Anspruch 2 oder 3, dadurch gekennzeichnet, daß der Treiber (18) nach Verstellen des Malteserkreuzes (19) mit einer Zylindersperre in einer entsprechend teilzylindrisch geformten Ausnehmung des Malteserkreuzes zu dessen Arretierung einliegt.

5. Vorrichtung nach einem der Ansprüche 2 bis 4, dadurch gekennzeichnet, daß das Verschlußglied (2) der Absperrvorrichtung koaxial von einem axial eindrückbaren Stößel (7) durchsetzt ist, durch den das Ventilstellglied (60) eines durch eine thermoelektrische Zündsicherung gesteuerten Sicherheitsventils (14) in Offenstellung bewegbar ist.

6. Vorrichtung nach Anspruch 5, dadurch gekennzeichnet, daß am ersten Drehteil (3) oder am Treiber (18) ein radialer, am Stößelende anliegender Arm (16) befestigt ist, der, um den Stößel (7) einzudrücken, durch ein axiales Eindrücken des Handgriffes (55) in axialer Richtung mitbewegbar ist.

7. Vorrichtung nach einem der Ansprüche 1 bis 6, dadurch gekennzeichnet, daß das erste Drehteil (3) mit dem Handgriff (55) fest verbunden ist, in eine koaxiale Hülse (8) des Treibers (18) hineinreicht und einen Mitnehmerstift (4) aufweist, der in zwei diametral angeordneten axialen Längsschlitzen (8a, 8b) der Hülse (8) beweglich einliegt und über den Hülsenumfang beidseitig hinausragt zur Bewegung des radialen Armes (16) gegen Federdruck in Achsrichtung.

8. Vorrichtung nach einem der Ansprüche 1 bis 7, dadurch gekennzeichnet, daß am Treiber (18) auf der dem ersten Drehteil (3) gegenüberliegenden Seite das den Ventilsitz tragende Ventilstellglied (21), insbesondere eine Gewindespindel, koaxial drehfest und axial verschieblich befestigt ist, das mit einem koaxialen Gewinde in einem entsprechenden Gewinde der Vorrichtung einliegt und nach Axialverschiebung an der Dichtung (25) des Ventiltellers (26) zur Anlage gelangt.

9. Vorrichtung nach Anspruch 8, dadurch gekennzeichnet, daß der Ventilsitz von einem koaxialen Ventilteller (26) gebildet wird, der gegenüber dem Ventilstellglied (21) durch eine von einem Thermostat gesteuerte Vorrichtung (33, 35, 41) bewegbar ist.

10. Vorrichtung nach Anspruch 9, dadurch gekennzeichnet, daß der Ventilteller (26) auf einer koaxialen Stange (24) fest ist, die in einer koaxialen Bohrung im Ventilstellglied (21) gleitend einliegt.

11. Vorrichtung nach Anspruch 9 oder 10, dadurch gekennzeichnet, daß die thermostatgesteuerte Vorrichtung mit einer koaxialen Spitze (35) an dem Ventilteller oder der Stange (24) punktförmig anliegt.

12. Vorrichtung nach einem der Ansprüche 8 bis 11, dadurch gekennzeichnet, daß der Ventilsitz, insbesondere der Ventilteller (26), eine Kunststoffdichtung (25) insbesondere aus Polytetrafluoräthylen trägt.

13. Vorrichtung nach einem der Ansprüche 9 bis 12, dadurch gekennzeichnet, daß die vom Thermostat gesteuerte Vorrichtung einen Balg (33) aufweist, der von dem Flüssigkeitsdruck eines Thermostatfühlers (41) beaufschlagt ist.

**Claims**

1. Apparatus for controlling the supply of gas to a gasusing apparatus having at least one flame, more particularly a gas cooker, with two shutoff arrangements which are situated one behind the other in the gas supply conduit and of which the first is a shutoff device having a rotatable closure element, more particularly a cock provided with a cock plug (2), which is substantially only fully opened or fully closed, and of which the second is a valve (21 – 26) with an adjustment element (21) adapted to occupy intermediate positions as well as the end positions for the purpose of regulating the throughflow quantity, each shutoff arrangement being operated by a rotary part (3; 9), more particularly a shaft, the axes of the rotary parts (3; 9) being parallel to one another, and the first rotary part (3) being driven by a knob (55) and the second rotary part (9) being driven by the first rotary part (3) through a transmission (18, 19), and the first rotary part (3), which is driven by the knob (55), drives the adjustment element (21) of the valve direct and drives the closure element of the shutoff device by way of the transmission (18, 19), characterised in that the transmission is a Geneva stop transmission having a driver (18) connected to the first rotary part (3) and having a Geneva stop disc (19) connected to the second rotary part (9).

2. Apparatus according to claim 1, characterised in that the shuttoff device opens only one outlet (c), and the driver (18) has only one pin (56) which engages in a slot (E) of the Geneva stop disc (19).

3. Apparatus according to claim 1, wherein the shutoff device opens selectively one of two outlets, characterised in that the driver (18) has two pins (56, 57) which engage in two slots (E, F) of the Geneva stop disc (19).

4. Apparatus according to claim 2 or 3, characterised in that after movement of the Geneva stop disc (19) the driver (18) with a cylindrical detent element occupies an appropriately partly cylindrically shaped recess in the Geneva stop disc to arrest the latter.

5. Apparatus according to one of claims 2 to 4, characterised in that through the closure element (2) of the shutoff device there extends coaxially a push member (7) which can be pressed-in axially and whereby the valve adjustment element (60) of a safety valve (14) controlled by a thermo-electric safety pilot is adapted to be moved into the open position.

6. Apparatus according to claim 5, characterised in that on the first rotary part (3) or on the driver (18) there is secured a radial arm (16) which abuts on the push member end and which, to press-in the push member (7), is adapted to be co-moved in an axial direction by axial pressing-in of the knob (55).

7. Apparatus according to one of claims 1 to 6, characterised in that the first rotary part (3) is securely connected to the knob (55), extends into a coaxial sleeve (8) of the driver (18), and comprises an entrainment pin (4) which extends movably into two diametrally arranged axial longitudinal slots (8a, 8b) of the sleeve (8), and projects at both sides beyond the sleeve periphery for the purpose of moving the radial arm (16) against spring pressure in the axial direction.

8. Apparatus according to one of claims 1 to 7, characterised in that the valve adjustment element (21), more particularly a screwthreaded spindle, which carries the valve seat is secured coaxially in rotationally rigid and axially displaceable manner on the driver (18) at that side which is opposite from the first rotary part (3), and said element has a coaxial screwthread with which it is arranged in a corresponding screwthread of the device and, after axial displacement, comes to abut on the sealing element (25) of the valve disc (26).

9. Apparatus according to claim 8, characterised in that the valve seat is formed of a coaxial valve disc (26) which is adapted to be moved relatively to the valve adjustment element (21) by a device (33, 35, 41) controlled by a thermostat.

10. Apparatus according to claim 9, characterised in that the valve disc (26) is fast with a coaxial rod (24) arranged slidably within a coaxial bore in the valve adjustment element (21).

11. Apparatus according to claim 9 or 10, characterised in that the thermostat-controlled device has a coaxial pointed tip element (35) with which it is in point contact against the valve disc or the rod (24).

12. Apparatus according to one of claims 8 to 11, characterised in that the valve disc (26), carries a plastics material seal, more particularly of polytetrafluoroethylene.

13. Apparatus according to one of claims 9 to 12, characterised in that the device controlled by the thermostat comprises a bellows (33) which is acted upon by the fluid pressure of a thermostat sensor (41).

**Revendications**

1. Dispositif de commande de l'amenée de gaz à un consommateur de gaz présentant au moins une flamme, en particulier une cuisinière à gaz, avec deux organes d'arrêt disposés l'un derrière l'autre dans la conduite d'amenée de gaz, dont le premier est constitué par un dispositif d'arrêt avec un obturateur rotatif, en particulier un robinet avec un boisseau (2), qui est essentiellement seulement totalement ouvert ou complètement fermé, et le second est constitué par un robinet à soupape (21 – 26) avec un élément de réglage (21) qui occupe des positions intermédiaires entre les positions d'extrémité pour le réglage du débit de passage, chaque organe d'arrêt étant actionné au moyen d'une pièce pivotante (3; 9), en particulier une tige, les axes des pièces pivotantes (3; 9) étant parallèles entre eux et la première pièce pivotante (3) étant actionnée au moyen d'une poignée (55) et la seconde pièce pivotante (9) étant entraînée par la première pièce pivotante (3) par l'intermédiaire d'un engrenage (18, 19), et la première pièce pivotante (3) entraînée par la poignée (55) entraînant directement l'élement de réglage (21) du robinet à soupape et entraînant l'élément d'arrêt du dispositif d'arrêt par l'intermédiaire de l'engrenage (18, 19), caractérisé par le fait que l'engrenage est constitué par un mécanisme croix de Malte avec un menant (18) relié à la première pièce pivotante (3) et une croix de Malte (19) reliée à la seconde pièce pivotante (9).

2. Dispositif selon la revendication 1, caractérisé par le fait que le dispositif d'arrêt n'ouvre qu'une sortie (c) et le menant (18) ne présente qu'une broche (56) qui engrène dans une fente (E) de la croix de Malte (19).

3. Dispositif selon la revendication 1, dans lequel le dispositif d'arrêt ouvre à volonté l'une de deux sorties, caractérisé par le fait que le menant (18) présente deux broches (56, 57) qui engrènent dans deux fentes (E, F) de la croix de Malte (19).

4. Dispositif selon l'une des revendications 2 et 3, caractérisé par le fait que le menant (18), après réglage de la croix de Malte (19), est logé par un arrêt cylindrique dans un évidement partiellement cylindrique, de forme correspondante, de la croix de Malte pour l'arrêt de celle-ci.

5. Dispositif selon l'une des revendications 2 à 4, caractérisé par le fait que l'obturateur (2) du dispositif d'arrêt est traversé coaxialement par un coulisseau (7) enfonçable axialement par lequel l'élément de réglage (60) de la soupape d'une soupape de sureté (14) commandée par une veilleuse de sécurité thermoélectrique peut être déplacé en position d'ouverture.

6. Dispositif selon la revendication 5, caractérisé par le fait qu'un bras radial (16) adjacent à l'extrémité du coulisseau est fixé à la première pièce pivotante (3) ou au menant (18) et qui, pour enfoncer le coulisseau (7), peut être entraîné en déplacement en direction axiale par un enfoncement axial de la poignée (55).

7. Dispositif selon l'une des revendications 1 à 6, caractérisé par le fait que la première pièce pivotante (3) est fixée à la poignée (55), pénètre à l'intérieur d'une douille coaxiale (8) du menant (18) et présente une broche d'entraînement (4) qui est logée mobile dans deux fentes axiales allongées (8a, 8b) diamétralement opposées de la douille (8) et qui dépasse des deux côtés au-delà de la périphérie de la douille pour le déplacement du bras radial (16) en direction axiale contre une pression de ressort.

8. Dispositif selon l'une des revendications 1 à 7, caractérisé par le fait que l'élément de réglage (21) du robinet à soupape portant le siège de soupape, en particulier une broche filetée, est monté solidaire en rotation et coulissant axialement sur le menant (18) du côté opposé à la première pièce rotative (3), cet élément de réglage (21) étant logé par un filetage coaxial dans un taraudage correspondant du dispositif et venant en appui sur le joint (25) de la tête de soupape (26) après coulissement axial.

9. Dispositif selon la revendication 8, caractérisé par le fait que le siège de soupape est formé par une tête de soupape coaxiale (26) qui est mobile par rapport à l'élément de réglage (21) du robinet à soupape au moyen d'un dispositif (33, 35, 41) commandé par un thermostat.

10. Dispositif selon la revendication 9, caractérisé par le fait que la tête de soupape (26) est fixée sur une tige coaxiale (24) qui est logée à coulissement dans un alésage coaxial de l'élément de réglage (21) du robinet à soupape.

11. Dispositif selon l'une des revendications 9 et 10, caractérisé par le fait que le dispositif à commande thermostatique est en appui ponctuel par une pointe coaxiale (35) sur la tête de soupape ou la tige (26).

12. Dispositif selon l'une des revendications 8 à 11, caractérisé par le fait que le siège de soupape, en particulier la tête de soupape (26), porte un joint en matière synthétique (25) en particulier en polytétrafluoréthylène.

13. Dispositif selon l'une des revendications 9 à 12, caractérisé par le fait que le dispositif commandé par thermostat présente un soufflet (33) qui est soumis à la pression de fluide d'une sonde thermostatique (41).

0 027 898

Fig.1

Fig.2

FIG. 6

18

20

56

E

C

B

2

FIG.7

Regelbereich

18

20

56

E

C

B

2

19

FIG. 3

18

20

56

57

E

C

B

D

F

2

19

FIG. 4

18

Regelbereich

57

56

20

56

E

C

B

D

2

19

F

FIG. 5

18

57

56

II

20

20

57

F

E

C

B

D

2

19

FIG.8

FIG.9

FIG.10

FIG.11

FIG.12

FIG.13

FIG.14

13